# EUROPEAN PATENT SPECIFICATION

(11) **EP 1 780 174 B1**
(45) Date of publication and mention of the grant of the patent: **01.12.2010**
(21) Application number: 05023509.2
(22) Date of filing: 27.10.2005
(51) Int. Cl.: B81B 7/02, B81B 3/00, G01B 5/28

(54) **Nano data writing and reading apparatus using cantilever structure and fabrication method thereof**
Nanodatenschreib- und Lesevorrichtung mit Cantileverstruktur und Herstellungsverfahren dafür
Appareil d'écriture et de lecture de nanodonnées utilisant une structure en porte-à-faux et son procédé de fabrication

(43) Date of publication of application: 02.05.2007
(73) Proprietor: LG Electronics Inc., Seoul 150-721 (KR)
(72) Inventor: Kim, Young-Sik, Gwanak-Gu Seoul (KR); Nam, Hyo-Jin, 1-Dong Gangdong-Gu Seoul (KR)
(74) Representative: Beyer, Andreas

(56) References cited:
- EP-A- 0 785 410
- EP-A- 0 860 726
- US-A- 5 475 318
- US-A- 5 883 387
- US-A- 5 929 438
- US-A- 6 148 662
- US-A1- 2004 097 002
- US-A1- 2004 119 490
- US-A1- 2005 051 515

## Description

### BACKGROUND OF THE INVENTION

### 1. Field of the Invention

The present invention relates to a nano data writing and reading apparatus using a cantilever structure and its fabrication method, and particularly, to a nano data writing/reading apparatus using a cantilever structure and its fabrication method configured to improve durability and performance of the cantilever structure and remarkably reduce a fabrication process.

### 2. Description of the Background Art

In general, an atomic force microscope is a device for measuring the topography of surfaces, using a cantilever structure, and a fine cantilever probe is formed at a front end portion of one side of a cantilever in the atomic force microscope. By using the cantilever probe, the surface topography and an electrical or magnetic characteristic of a sample can be identified with a nanometer scale resolution. The biggest advantage of such an atomic force microscope is its resolution that is high enough to directly measure an atomic structure by using a probe of several nanometers.

Recently, research is actively ongoing on a data writing and reading apparatus having a storage density of more than Tbit/in² by using the high resolution of the atomic force microscope. A device that writes data upon changing properties of a storage media by using the cantilever probe is called "a data writing apparatus using an SPM(Scanning Probe Microscopy) principle". As the method of changing the storage media by using the SPM principle, there are a method of mechanically changing the media by using heat, a method of changing a polarity of a ferroelectric such as a piezoelectric driver, a method of inducing a change in resistance by changing a phase with heat or electricity, using a phase transition material, and the like. Besides, a method using a ferromagnetic material or the like is used.

The representative one of the data writing and reading apparatuses using such various SPM principles is "Millipede" developed by IBM. It uses a polymer material (e.g., PMMA) as recording media by applying a principle of an atomic microscope, which is one of the SPM principles. The Millipede is configured such that a plurality of unit cantilevers (64X64) are disposed for the purpose of improving a speed. Such a unit cantilever includes a silicon probe, a heater and a silicon cantilever.

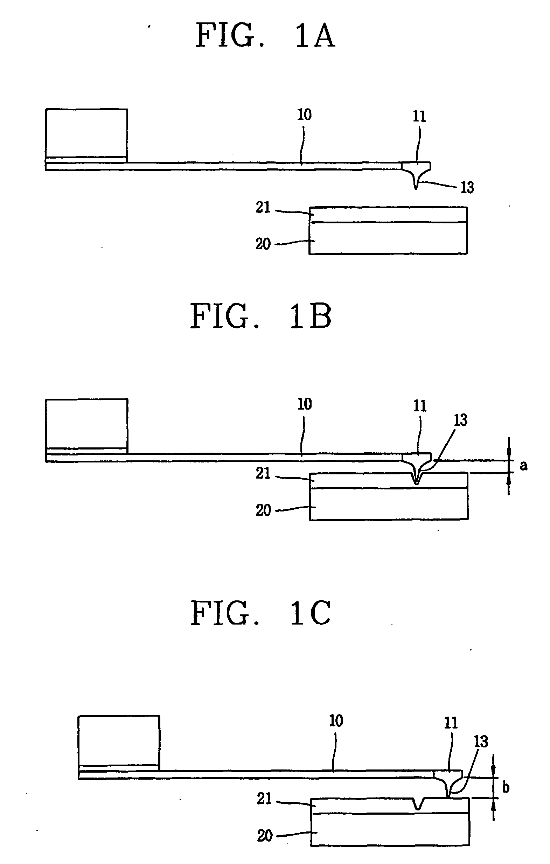

Figures 1A and 1B are sectional views of a unit cantilever of the conventional nano data writing and reading apparatus developed by IBM, namely, the Millipede, which shows an operation principle of writing and reading data on and from the media.

First, as shown in Figure 1A, data is written on or read from the media including a silicon substrate 20 and a polymer part 21 by using a cantilever 10 having a heater 11 formed in contact with the probe 13.

Figure 1B shows a method for writing data on the media. In the drawing, the writing is performed by forming a hole. The hole is formed such that the polymer part 21 of the media including the silicon substrate 20 and the polymer part 21 is melt by heating a heater 11 formed at an end portion of the cantilever 10.

A method of reading the data written on the media will now be described with reference to Figures 1B and 1C. First, when the data is read, the heater 11 is heated and then the reading is performed by using a difference between rates at which the heater 11 is cooled. When the probe 13 is inserted in a hole formed as shown in Figure 1B, a distance (a) between the heater 11 and the media 20, 21 becomes short, and heat is diffused to the media 20, 21 through the probe, which makes a cooling rate of the heater 11 high. In contrast, when the probe 13 is placed on the surface of the media 20, 21 as shown in Figure 1C, a distance (B) between the heater 11 and the media 20, 21 becomes long, which makes the cooling rate of the heater 11 low. In such a manner, it can be determined whether or not the hole exists, so that the data can be read.

Such a writing and reading method is called a thermo-mechanical method.

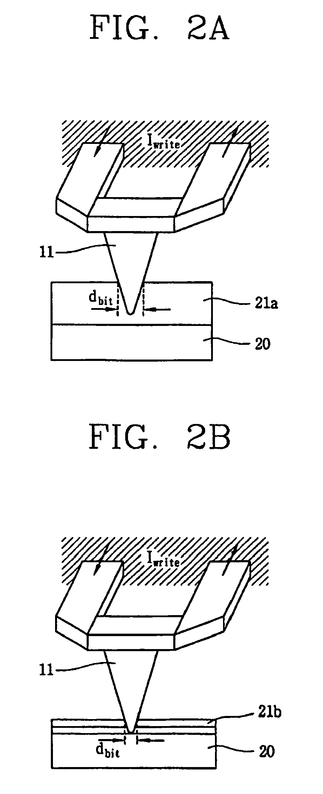

Figures 2A and 2B are views which specifically illustrate the method of writing data by using the cantilever employing the thermo-mechanical method. As shown in the drawings, a range of a region within which the data is stored is varied according to a thickness of a polymer of recording media. Namely, as shown in Figure 2A, if a thick polycarbon 21a is used as media, a region (d_{bit}) for writing becomes large, thereby lowering a writing density. In contrast, as shown in Figure 2B, if a thin PMMA 21b is used as the media, a region (d_{bit}) for the writing becomes small, thereby increasing the writing density. Accordingly, the PMMA 21b having a high density is commonly used as the media. Also, if the PMMA is used as the media, a time required for the writing is also reduced.

Because it takes a relatively long time to write and read the data by the thermo-mechanical method, a plurality of unit cantilevers are arranged and used as writing and reading head parts in order to improve a writing and reading rate. A method for fabricating a cantilever array head therefor is disclosed in a report issued by IBM in the 2003 (Nanotechnology-based Approach to Data storage (RZ 3480, 2003, 08, 25), p.1907~1910 of Transducer'03).

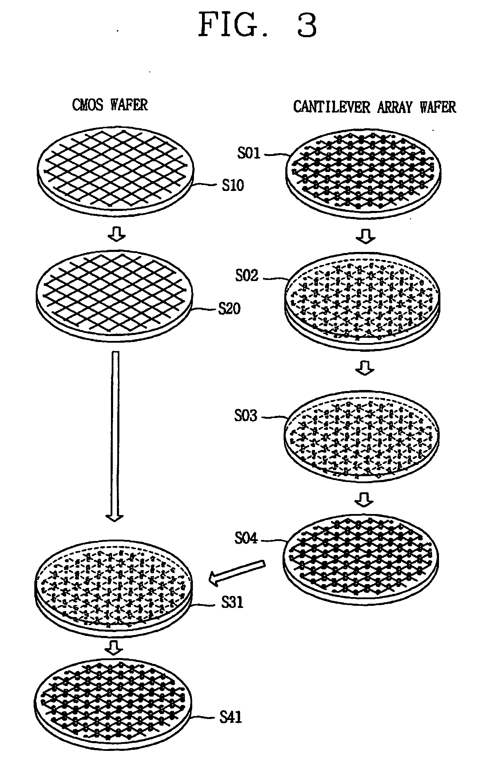

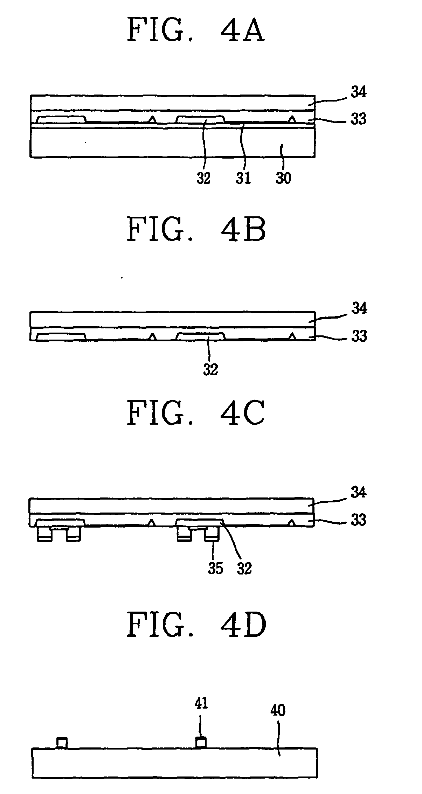

Figures 3 and 4A~4F illustrate a core part of the method of fabricating a cantilever array structure released by IBM in 2003. Figure 3 is a conceptual view of a wafer-level fabrication method, and Figures 4A to 4F are sectional views of a unit cantilever, for illustrating sequential processes of the cantilever fabrication method.

Figure 3 is a conceptual view which illustrates an entire process for forming a data writing and reading apparatus by bonding a signal transfer circuit unit wafer with a cantilever array wafer which are made by two separate processes.

First, fabricating a wafer where a signal transfer circuit unit is formed is constituting an electric circuit by using CMOS. Here, an electronic circuit part processing driving signals and data of a data writing and reading apparatus to be formed later is formed (S10), and a structure for bonding with a cantilever part which is separately formed is formed (S20).

As for the fabrication of a cantilever array wafer, a cantilever structure is formed on a seed wafer to be sacrificed (S01), a glass wafer is bonded with an entire upper surface of the cantilever structure (S02), the cantilever structure is transferred onto the glass wafer by removing the seed wafer (S03), and the glass wafer is flipped over and a structure for the bonding with the wafer having the signal transfer circuit unit is formed (S04).

When the fabrication of the signal transfer circuit unit wafer and the cantilever array wafer is completed, the bonding structures formed at both the wafers, respectively, are made to face each other, and then, the two wafers are bonded by heat and pressure applied thereto (S31). Then, the glass wafer which has supported the cantilever structure is removed (S41). Namely, the cantilever structure is transferred to the signal transfer circuit unit wafer.

In the aforedescribed process, the process of bonding the seed wafer with the glass wafer is required in the cantilever array wafer process, and the process of bonding the signal transfer circuit unit wafer with the cantilever array wafer is also required. Namely, a process difficult to perform such as an alignment process between the structures should be performed twice, which causes problems in that it requires a long time to perform the process, a yield is reduced and a cost is increased.

Figures 4A to 4F are views which illustrate the aforedescribed process in the aspect of a unit cantilever in more detail.

In Figures 4A to 4C, a cantilever array structure 32 is formed, using a silicon wafer 30 on which an insulation film 31 has been formed (i.e., an SOI wafer (Silicon On Insulator)), and a glass wafer 34 having an coefficient of thermal expansion similar to that of silicon is bonded with the SOI wafer having the cantilever array structure 32 by using a polyimide layer 33 (Figure 4A). Then, the silicon substrate 30 and the insulation layer 31 are removed from the SOI wafer (Figure 4B).

A bonding structure 35 including a bonding pad and a bonding bump are formed on the exposed cantilever array structure 32 so as to be bonded with a wafer 40 having a signal transfer circuit unit for controlling the cantilever array structure 32 and transferring a signal. Such a bonding structure may be formed as two layers of polyimide such that a standard polyimide layer is formed and an adhesive polyimide layer is further formed thereon (Figure 4C), thereby preparing for a bonding process with the signal transfer circuit unit wafer 40 to be performed thereafter.

Figure 4D is a view which illustrates a structure of the signal transfer circuit unit wafer 40 formed by a separate process. On the signal transfer circuit unit wafer 40, an electric circuit unit for signal transfer is formed, and a bonding structure 41 for electric coupling between the electric circuit unit and the cantilever structure is formed. The bonding structure 41 is a metal stud formed including a part for bonding and a part for electrical connection.

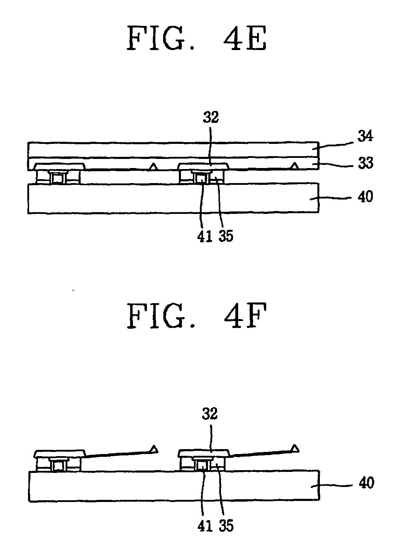

Figures 4E and 4F show a process in which the two wafers having passed through aforementioned processes are bonded together. First, the two wafers are aligned such that the bonding structure 41 formed on the signal transfer circuit unit wafer 40 is inserted between the bonding structures 41 formed on a lower portion of the cantilever array structure 32. Then, bonding is performed thereon under proper temperature and pressure (Figure 4E). Also, the glass wafer 34 and the polyimide layer 33 which have supported the cantilever array structure 32 are removed (Figure 4F).

However, in the nano data writing and reading apparatus using the conventional cantilever structure and its fabrication method, because the cantilever structure and the probe are formed by etching a part of a silicon device layer of the SOI wafer, variations in a thickness of the initial silicon device layer and in an etching rate occur, which makes it difficult to maintain a constant thickness of the cantilever structure. Also, because the probe formed of silicon is badly abraded from use, it is difficult to maintain reliability.

Also, in the conventional method for fabricating the cantilever structure, the process of bonding the glass wafer with the SOI wafer where the cantilever structure is arranged, and the process of bonding the wafer having the signal transfer circuit unit with the patterned SOI wafer should be performed. Such bonding processes greatly affect an entire yield of a product. Namely, because such a bonding process of a wafer level should be performed twice in the conventional method, an entire process becomes complicated, a yield of a final product is reduced, and a cost is increased.

If an SOI wafer having epi-silicon is used, variations in the thickness of the cantilever can be reduced, but problems of a large increase in cost and abrasion of a probe still remain.

US 2005/0051515 A1 relates to a cantilever microstructure and fabrication method thereof comprising a base plate, a cantilever beam extended from one surface of the base plate to outside so that a part thereof can be suspended, and formed of a silicon nitride material, and a probing tip formed at a front end of one surface of the cantilever beam; whereby the thickness of the cantilever beam becomes uniform and the mechanical and electrical characteristic thereof are improved.

US 6,148,662 refers to a high-sensitivity strain probe used in high-sensitivity sensor elements of force type. By the use of semiconductor process and wire bonding technology as well as integrated forming method, the fabricated elements include: a probe, a cantilever, a cantilever substrate, resistance materials, and a processing circuit that can be applied to a probe microscope to greatly reduce the number of elements of the scanning probe microscopy.

US 5,883,387 relates to an SPM cantilever and a method for manufacturing the same, wherein the SPM cantilever comprises a cantilever portion shaped as a thin plate and extending between a proximal end and a free end, a supporting portion attached to one surface of the cantilever portion on a side of the proximal end, and a probe projecting from the other surface of the cantilever portion on a side of the free end of the cantilever portion, wherein the supporting portion, the cantilever portion and the probe are made of different materials.

### SUMMARY OF THE INVENTION

Therefore, an object of the present invention is to provide a nano data writing and reading apparatus using a cantilever structure and its fabrication method configured to improve durability and performance of a cantilever structure and remarkably reduce a fabrication process.

To achieve these and other advantages and in accordance with the purpose of the present invention, as embodied and broadly described herein, there is provided a nano data writing and reading apparatus using a cantilever structure, the apparatus comprising: a cantilever formed by patterning a deposition material deposited on a sacrificial substrate; a probe formed at a front end portion of one surface of the cantilever and formed simultaneously with the cantilever as the deposition material is filled in a probe groove pattern formed on the sacrificial substrate when the deposition material is deposited on the sacrificial substrate; a heater formed of polycrystalline silicon at the cantilever, for heating the probe; a data sensing unit formed at the cantilever and sensing data written on media; a signal connection pad connected to the data sensing unit and formed at the cantilever to provide an electrical connection with an external signal line; a signal transfer circuit unit connected to the signal connection pad, for controlling writing and reading of data on and from the media; and a bonding unit allowing the cantilever to be supported at the signal transfer circuit unit and providing a passage for an electrical connection between the signal connection pad and the signal transfer circuit unit.

To achieve these and other advantages and in accordance with the purpose of the present invention, as embodied and broadly described herein, there is provided a fabrication method of a nano data writing and reading apparatus using a cantilever structure, the method comprising: a first step of forming a probe groove at a principle surface of a silicon substrate; a second step of forming a silicon nitride film at the principle surface of the silicon substrate, for forming a cantilever and a probe; a third step of forming a heater at a rear surface of the probe, patterning the cantilever on the silicon nitride film, and forming a signal connection pad electrically connected to the heater on the cantilever and a data sensing unit connected to the signal connection pad and sensing data; a fourth step of bonding a substrate provided with the signal transfer circuit unit with the silicon substrate provided with the cantilever, for supporting the cantilever and electrically connecting the signal transfer circuit unit with the signal connection pad; and a fifth step of removing the silicon substrate, for exposing the cantilever and the probe.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a unit of this specification, illustrate embodiments of the invention and together with the description serve to explain the principles of the invention.

In the drawings:
Figures 1A and 1C are conceptual views which illustrate an operation principle of a nano data writing and reading apparatus using the conventional cantilever structure;
Figures 2A and 2B are conceptual views of a media recording principle of the nano data writing and reading apparatus using the conventional cantilever structure;
Figure 3 is a schematic conceptual view which illustrates processes of a fabrication method of the nano data writing and reading apparatus using the conventional cantilever structure;
Figures 4A to 4F are sectional views of processes of the fabrication method of the nano data writing and reading apparatus using the conventional cantilever structure;
Figures 5A to 5C are structural views which illustrate a configuration of the nano data writing and reading apparatus using a cantilever structure in accordance with a first embodiment of the present invention;
Figures 6A and 6B are sectional views of a pattern for fabricating a probe of the nano data writing and reading apparatus using the cantilever structure in accordance with the first embodiment of the present invention;
Figures 7A and 7B are microscope images which show the probe fabrication result in accordance with the first embodiment of the present invention;
Figures 8A to 8I are sectional views which illustrate one example of sequential processes for fabricating the nano data writing and reading apparatus using the cantilever structure in accordance with the first embodiment of the present invention;
Figures 9A to 9I are sectional views which illustrate another example of sequential processes for fabricating the nano data writing and reading apparatus using the cantilever structure in accordance with a first embodiment of the present invention;
Figures 10A to 10C are structural views which illustrate a configuration of the nano data writing and reading apparatus using the cantilever structure in accordance with the second embodiment of the present invention;
Figure 11 is a conceptual view which illustrate a reading method of the nano data writing and reading apparatus having a cantilever structure in which a piezoelectric sensor is used as a data sensing unit;
Figures 12A to 12I are sectional views which illustrate one example of sequential processes for fabricating the nano data writing and reading apparatus using the cantilever structure in accordance with the second embodiment of the present invention;
Figures 13A to 13I are sectional views which illustrate another example of sequential processes for fabricating the nano data writing and reading apparatus using the cantilever structure in accordance with the second embodiment of the present invention; and
Figures 14A to 14D are views which illustrate another example of a bonding process of a cantilever structure substrate and a signal transfer circuit unit substrate in the process for fabricating the nano data writing and reading apparatus using the cantilever structure in accordance with the second embodiment of the present invention.

### DETAILED DESCRIPTION OF THE PREFERRED EMBODIMENTS

Reference will now be made in detail to the preferred embodiments of the present invention, examples of which are illustrated in the accompanying drawings.

A plurality of embodiments of a nano data writing and reading apparatus using a cantilever structure in accordance with the present invention may exists, and the most preferred embodiment will now be described.

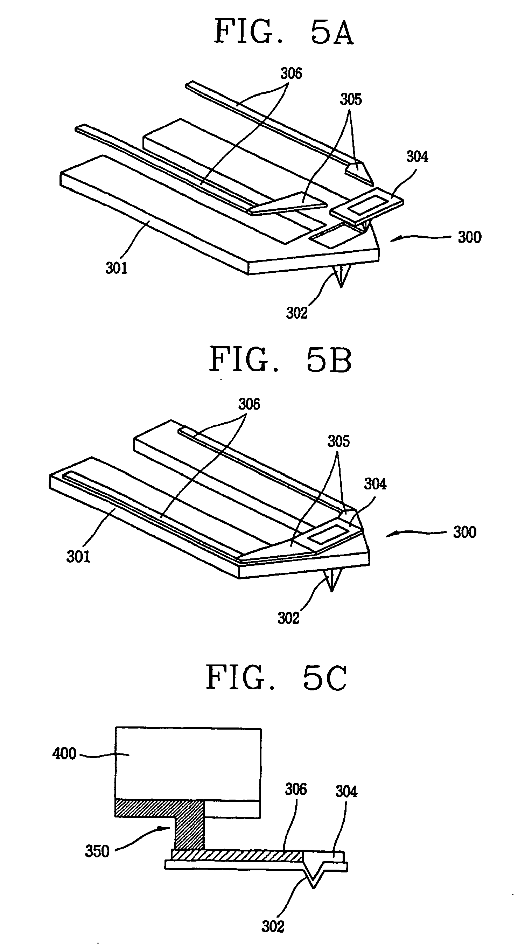

Figures 5A to 5C are views which illustrate a structure of a cantilever structure 300 in accordance with the first embodiment of the present invention. Figure 5A is an exploded perspective view of the cantilever structure, Figure 5B is an assembled perspective view of the cantilever structure, and Figure 5C is a sectional view which illustrates that a signal transfer circuit unit 400 for controlling and supporting the cantilever structure is bonded with the cantilever structure 300.

As shown, the nano data writing and reading apparatus using the cantilever structure in accordance with the first embodiment of the present invention includes a cantilever 301 formed by patterning a deposition material deposited on a sacrificial substrate to be etched and removed during a following process, a probe 302 formed at a front end portion of one surface of the cantilever 301 and formed simultaneously with the cantilever 301 such that the deposition material is filled in a probe groove pattern formed on the sacrificial substrate when being deposited on the sacrificial substrate, a data sensing unit formed at the cantilever 301 and sensing data written on media, a signal connection pad 306 connected to the data sensing unit and formed on the cantilever 301 to provide an electrical connection with an exterior signal line, a signal transfer circuit unit 400 connected to the signal connection pad 306 and writing and reading data on and from the media, and a bonding unit 350 allowing the cantilever 30 to be supported at the signal transfer circuit unit 400 and providing an electrical connection passage between the signal connection pad 306 and the signal transfer circuit unit 400.

Namely, the probe is formed by a molding technique using the sacrificial substrate as a mold. Here, one of a silicon nitride material, a silicon oxide material and a metal material is deposited as the deposition material deposited on the sacrificial substrate. Most preferably, the silicon nitride material is deposited to be used as a material of the cantilever and the probe.

Here, the data sensing unit includes a platform 305 formed of the same material as the heater 304 on the cantilever 301, connected to the heater 304 and the probe 302 and reading data through the heater 304. Namely, the heater is required to perform writing on the media, and the platform 305 is a resistor part having resistance and required to read the data. One side of the platform 305 is connected to a side surface of the heater 304 and its other side is connected to the signal connection pad 306.

A signal transfer circuit unit 400 for physically supporting the cantilever structure 300 and controlling the writing and reading operations is physically and electrically connected to the cantilever structure 300 through the bonding unit 350.

The bonding unit includes a first bonding part formed at one of the cantilever and the signal transfer circuit unit and a second boning part formed at the remaining one and coupled to the first bonding part. The more detailed structure of the bonding unit will be described in describing a fabrication method of the nano data writing and reading apparatus using the cantilever structure to be described later.

The important characteristics of the present invention are a material of the cantilever 301 and the probe 302 and a material of the heater 304 and the platform 305. Namely, in the present invention, when the cantilever 301 and the probe 302 are formed, a silicon nitride film, a silicon oxide film or a metal film formed by a chemical vapor deposition method is used in order to obtain the uniformity of a thickness of the cantilever 301 and improve the durability against the abrasion of the probe 302. Also, polycrystalline silicon is used for the heater 304 and the platform 305.

As to a shape of the probe 302 of the present invention, the precision is greatly improved (i.e., a sharp tip can be formed) as compared to the conventional probe formed simply by etching a silicon layer. Thus, the data can be written on the media with a high density.

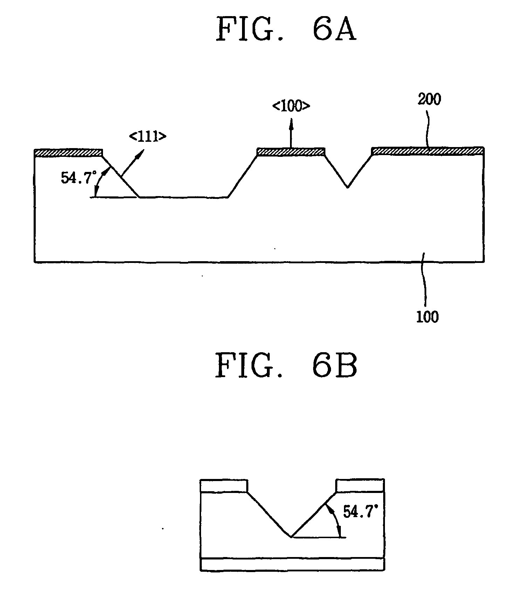

Figures 6A and 6B are views for explaining a method for forming a pattern for fabricating the probe in accordance with the present invention. In Figure 6A and 6B, characteristics of the probe proposed by the present invention are shown.

First, in the present invention, in order to make a groove for probe formation on a silicon substrate 100 to be sacrificed, a mask layer 200 is formed and patterned. Figure 6A is for explaining the characteristics of the groove formed in such a manner. When bulk etching is performed on the silicon substrate 100 of [100] direction by using etching solution (KOH), etching stop occurs at a (111) surface of the silicon. For this reason, as shown in Figure 6B, a groove of a pyramid structure having a gradient of 54.7° with accuracy is formed.

Because an etching ratio of the (111) surface and the (100) surface of the silicon substrate is 1:300, a groove for the cantilever arrangement may have the uniformity of its height when being made, which becomes an important characteristic of the present invention for the same reason the uniformity of the thickness of the cantilever 301 is important.

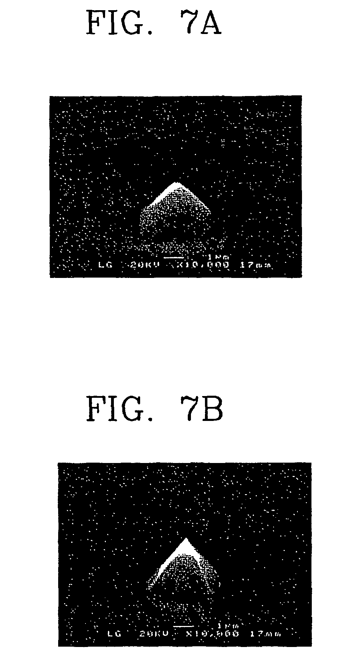

Then, a silicon nitride film is formed on the silicon substrate 100 having such a groove by the chemical vapor deposition method, thereby obtaining a cantilever 301 and a probe 302 structure formed thereon. The probe 302 formed in such a manner is shown in Figure 7A.

Also, the fabrication of the probe 302 can be performed by the following method in order to form a sharper probe.

Namely, as the substrate having a groove for the probe formation like the substrate shown in Figure 6A undergoes thermal oxidation, a silicon oxide film is formed with a thickness of 0.5~1µm. Here, because the growing rate of the silicon oxide film is high in the [111] direction and is low in the [100] direction, the groove of a pyramid shape has a very sharp form. Thus, the probe 302 formed by depositing a silicon nitride film to the groove where the silicon oxide film is further formed can have a very sharp shape. A micrograph of a probe substantially fabricated in such a manner is shown in Figure 7B.

In the present invention, a substrate having a cantilever structure can be formed without undergoing a bonding process with a glass wafer which is performed in the conventional art. Namely, unlike the conventional art, a wafer level bonding process may be performed only once during a process for fabricating the nano data writing and reading apparatus using the cantilever structure in accordance with the present invention.

Hereinafter, one example of a method for fabricating the nano data writing and reading apparatus using the cantilever structure in accordance with the first embodiment of the present invention will now be described.

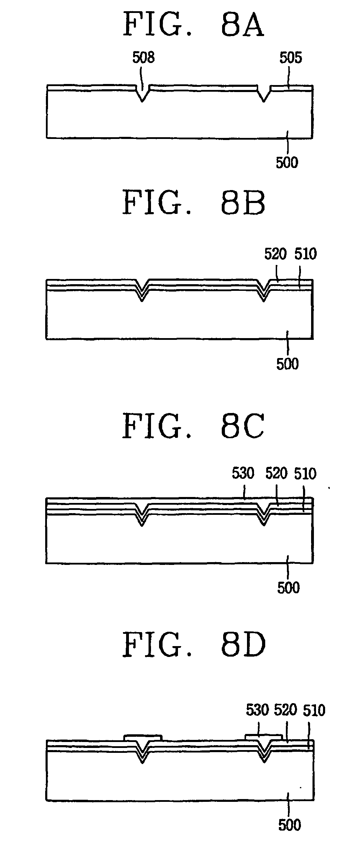

Figures 8A to 8I are sectional views which illustrate one example of sequential fabrication processes in accordance with the first embodiment of the present invention. As shown, the method for fabricating the nano data writing and reading apparatus using the cantilever structure in accordance with the present invention includes a separate process for fabricating a cantilever array substrate, a separate process for fabricating a signal transfer circuit unit substrate where a circuit unit for controlling the cantilever array substrate are formed, and a process of bonding the two substrates, which have been separately fabricated by the aforementioned processes through the waver-level bonding, and then removing unnecessary portions.

Such processes are identically applied to fabrication processes in accordance with various embodiments provided thereafter. The order of the separate fabrication processes of the cantilever array substrate and the signal transfer circuit unit substrate provided may be reversed.

First, as shown in Figure 8A, a mask layer 505 is formed on a principle surface of a silicon substrate 500 to be used as a sacrificial substrate, and then a portion where a probe 302 is to be formed undergoes bulk-etching, thereby forming a probe groove 508 of a pyramid shape. Here, the silicon substrate 500 should be a substrate where a (100) surface is formed in a surface direction.

As shown in Figure 8B, the mask layer 505 is removed, and then the silicon substrate 500 undergoes thermal oxidation, thereby forming a silicon oxide film 510 with a thin thickness. Then, in order to form a cantilever 301 and a probe 302 placed at a front end portion of one surface of the cantilever, a silicon nitride film 520 is formed thereon by a chemical vapor deposition method. Because the silicon oxide film 510 is formed at different growth rates between a portion of the silicon substrate where the probe groove is not formed and the probe groove 508 formed on the silicon substrate 500, a boundary between a corner portion and a lower end portion becomes obvious. Accordingly, the probe 302 formed of the silicon nitride film 520 formed on the silicon oxide film 510 has a sharp exterior.

Here, the silicon oxide film 510 may not be formed but it is very much preferable to form the silicon oxide film 510 before the silicon nitride film 520 is formed, so that the probe 302 can be more sharply formed as described above.

Then, as shown in Figure 8C, a polycrystalline silicon film 530 for forming a heater at a rear surface of the probe 302 is deposited.

As shown in Figure 8D, the polycrystalline silicon film 530 is patterned to thereby form a heater 304 and a platform 305.

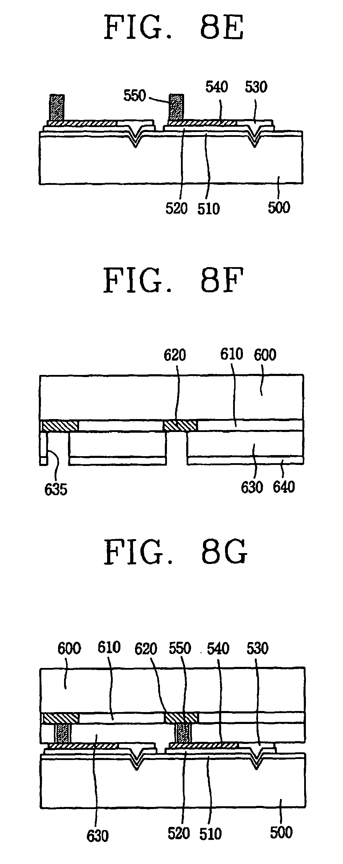

Then, as shown in Figure 8E, a signal connection pad 540 for transferring a signal to the heater 304 and the platform 305 is formed of a metal thin film, and the silicon nitride film 520 is patterned to form a cantilever 301. Then, a bonding bump 550 protruding from one surface of the cantilever 301 to a certain height is formed so as to electrically connect the signal connection pad 540 to an exterior portion. The bonding bump 550 is formed by using a metal material such as Au-Sn.

Here, a silicon nitride material is taken as an example as a material deposited to form the cantilever and the probe. However, the cantilever and the probe may be formed by depositing a thin film of a silicon oxide material or a metal material as mentioned above.

Through the aforementioned processes, a part for the cantilever array substrate is prepared.

As shown in Figure 8F, a bonding pad 620 connected to a signal line (not shown) of the signal transfer circuit unit 400 on the substrate 600 on which the signal transfer circuit unit 400 for controlling the cantilever is formed is formed through a separate process. Then, a standard polyimide layer 630 and an adhesive polyimide layer 640 are sequentially formed on an entire surface of the substrate 600 where the signal transfer circuit unit 400 has been formed, and a through hole 635 is formed so as to expose the bonding pad 620. The standard polyimide layer 630 is for maintaining a height for bonding, and the adhesive polyimide 640 melts more easily than the standard polyimide layer to thereby bond the substrate 600 on which the signal transfer circuit unit 400 is formed together with the silicon substrate 500 on which the cantilever array is formed.

Through the aforementioned processes, a part for the signal transfer circuit unit substrate is prepared.

As shown in Figure 8G, the prepared signal transfer circuit unit substrate 600 and the prepared cantilever array substrate 500 are disposed such that the through hole 635 of the signal transfer circuit unit substrate 600 meshes with the bonding bump 550 of the cantilever array substrate 500. Then, the two substrates are attached together by high temperature and high pressure, thereby performing the wafer-level bonding. Here, the temperature is a temperature at which metal of the bonded portion of the bonding bump 550 melts, and the pressure is 5~6bar.

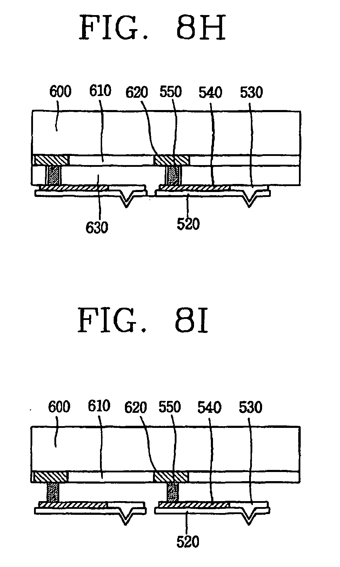

As shown in Figure 8H, the silicon substrate 500 supporting the cantilever is removed by grinding and dry-etching or wet-etching , and the silicon oxide film 510 is also removed.

As shown in Figure 8I, the standard polyimide layer 630 and the adhesive polyimide layer 640 on the signal transfer circuit unit substrate are removed, so that the cantilever 301 is supported at the signal transfer circuit unit 400 and suspended.

The nano data writing and reading apparatus using the cantilever in accordance with the first embodiment of the present invention can be formed through the aforedescribed processes. Also, such a nano data writing and reading apparatus can write and read the data by the thermo-mechanical method. In the present invention, it is seen through the processes that only one wafer-level bonding process is required, which means that the fabrication method in accordance with the present invention has a high process yield and requires a low cost as compared to the conventional fabrication method.

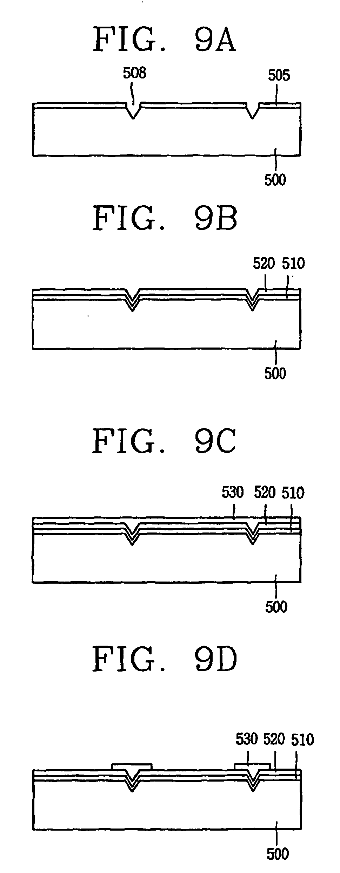

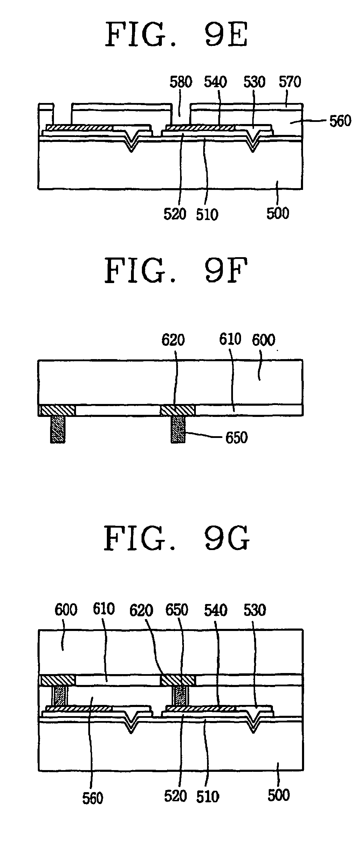

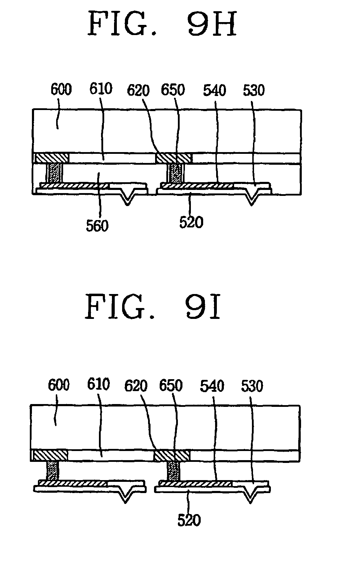

Figures 9A to 9I are sectional views which show another example of sequential processes for fabricating the nano data writing and reading apparatus using the cantilever structure in accordance with the first embodiment of the present invention. The processes are performed in the similar manner to those of the fabrication method described through Figures 8A to 8I. The difference therebetween is that polyimide layers 560 and 570 and a through hole 580 are formed on the cantilever array substrate and a bonding bump 650 meshing therewith is formed on a bonding pad 620 formed on the signal transfer circuit unit substrate.

Namely, after the standard polyimide layer 560 and the polyimide layer 570 for adhesion are sequentially formed on the substrate 500 provided with the cantilever, the through hole 580 is formed so that part of the signal connection pad 540 is exposed for a connection with an exterior part. Also, the bonding pad 620 connected to a circuit unit signal line on the signal transfer circuit unit substrate 600 is formed, and a bump 650 is protrudingly formed on the bonding pad 620 to a certain height and is electrically connected to an exterior portion. Then, the two substrates are bonded together, and the exposed signal connection pad 540 is coupled with the bump 650, thereby forming the bonding unit 350.

Namely, the cantilever array substrate 500 and the signal transfer circuit unit substrate 600 are bonded through the bonding unit 350, and the bonding unit 350 is formed such that a first bonding structure formed on one of the cantilever array substrate 500 and the signal transfer circuit unit substrate 600 is coupled to a second bonding structure formed on the remaining substrate.

The substrate where bonding structures are formed during a specific fabrication process is not limited but may be flexibly adjusted corresponding to a process state or a fabrication environment, so that a process design can be freely made.

Such characteristics of the present invention in the aspect of the structure and the fabrication method can be applied to a cantilever employing a thermo-piezoelectric method.

The thermo-piezoelectric method uses the thermo-mechanical method only to write data and uses a piezoelectric sensor to read the data. In such a method, a ZnO or PZT thin film is integrated with a cantilever in a capacitor type, and the data is read by measuring vibration generated at the time of reading.

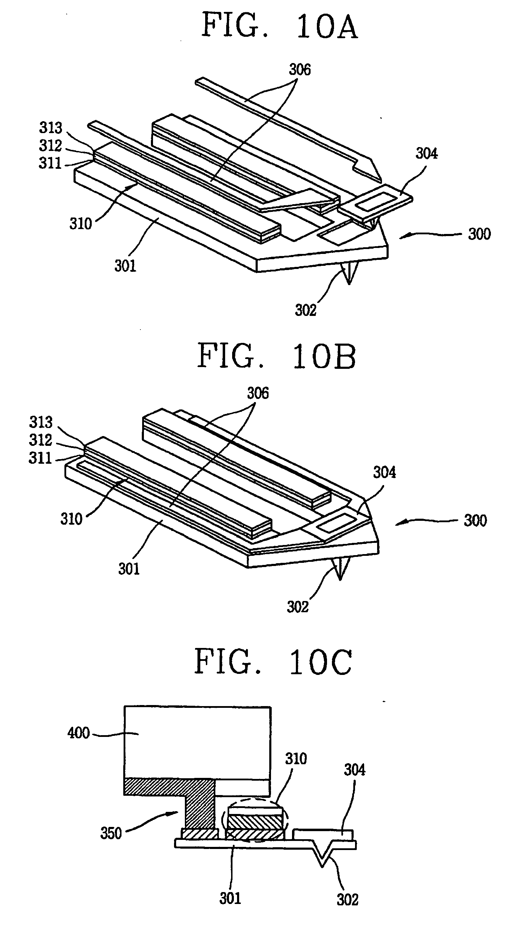

Figures 10A to 10C are conceptual views which illustrate a structure of the nano data writing and reading apparatus using the cantilever in accordance with the second embodiment of the present invention and its operation method. As shown, in order to read the data written on a PMMA media, the nano data writing and reading apparatus further having the piezoelectric sensor disposed at a cantilever structure provided with a heater is used. The writing of the data is made by forming a groove by heating the heater like the cantilever using the conventional thermo-mechanical method.

The structure of the nano writing and reading apparatus using the cantilever in accordance with the second embodiment of the present invention will now be described in detail. Here, the same reference numerals are given to the same structures as those of the first embodiment.

As shown, the nano data writing and reading apparatus using the cantilever in accordance with the second embodiment of the present invention includes a cantilever 301 formed of a silicon nitride material, a probe 302 formed of the same material as that of the cantilever body 301, a heater 304 formed of polycrystalline silicon on a cantilever body where the probe 302 is formed, a piezoelectric sensor 310 disposed in a longitudinal direction of the cantilever body, a signal connection pad 306 connected to the heater 304 and providing an electrical connection with an external signal line, a signal transfer circuit unit 400 separately formed, for controlling data writing and reading performed through the cantilever structure, and a bonding unit 350 allowing the cantilever 301 to be supported at the signal transfer circuit unit 400 and providing an electrical passage between the signal connection pad 306 and the signal transfer circuit unit 400.

Namely, a data sensing unit for sensing data stored on the media includes the piezoelectric sensor 310, not a platform formed of polycrystalline silicon, which is proposed in the first embodiment.

In the second embodiment, the cantilever body 301 and the probe 302 are also formed of a silicon nitride film formed by the chemical vapor deposition method, thereby improving the uniformity of a thickness and the durability against abrasion. Also, the probe 302 may be formed by using the silicon substrate to be sacrificed and the silicon oxide film as a mold, so that the probe 302 can have a sharp shape.

The piezoelectric sensor 310 is a capacitor type sensor with a piezoelectric material 312 such as PZT, ZnO or the like placed between a lower substrate 311 formed of Ti/Pt and an upper substrate 313 using RuO₂.

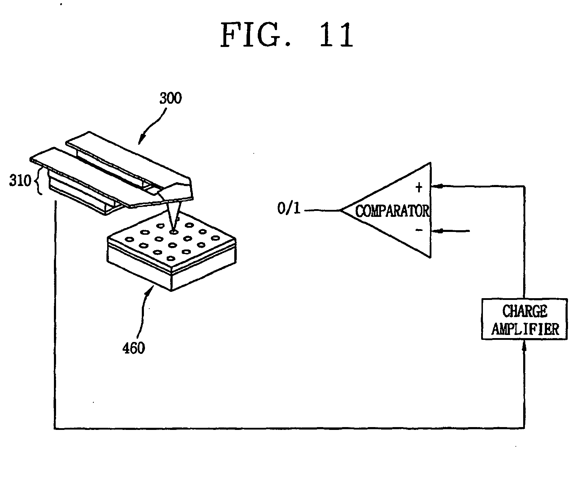

Figure 11 is a conceptual view which illustrates a reading method of the nano data writing and reading apparatus having the cantilever structure using the piezoelectric sensor as the data sensing unit.

As for the method for reading the data from a groove formed on the media, as shown in Figure 11, when the cantilever 300 moves over the media 460 having grooves, that is, scans the media the probe of the cantilever is inserted in the groove formed on the media. Here, stress of the cantilever itself is changed, and such a change is recognized by the integrated piezoelectric sensor 310. By such a stress change of the cantilever, the stress of the piezoelectric material included in the piezoelectric sensor 310 is changed, and a small electric charge thusly occurs. The induced electric charge is converted into a voltage by an electric charge amplifier, and the data of 0 and 1 is outputted through a comparator.

Reading the data by using the piezoelectric sensor has several crucial advantages.

The first advantage is that, because a signal is automatically generated due to a change in the cantilever stress at the time of data reading, power consumption does not occur during the reading, which works as a great merit when the data reading method using the piezoelectric sensor is applied to portable devices.

The second advantage is flexibility in selecting media. When both writing and reading are performed by the thermo-mechanical method, an appropriate temperature should be maintained so as to secure appropriate sensitivity for the reading, which means that the use of media vulnerable to a high temperature is restricted. Thus, if there is no need to rise a temperature in order to read the data as in the thermo-piezoelectric method, the media can be selected freely.

The third advantage of reading the data using the piezoelectric sensor is that a structure for reading is simple and measurement precision is improved because a variation between cantilevers, namely, offset does not occur. When the data should be read by basically using a resistor part (i.e., platform) such as a resistance change using heat, a resistance change through pressure or the like, the resistor part should be very delicately produced, which is difficult. However, because every cantilever has a slightly different resistor part in general, in order to overcome the output voltage offset due to such resistance differences, a method of integrating an identical part in a place adjacent to the resistor part and using the integrated resistance as reference resistance or a method of removing a DC offset voltage by using a high frequency through filter should be used. The former method has problems in that two cantilevers are integrated in one region and the latter one has problems in that a large capacitor should be integrated. Also, in a temperature sensing method, a surrounding temperature may cause offset, which may work as a fatal flaw when it is put to practical use.

Lastly, because an electric charge related to a data-reading rate is generated at a rate of merely about several ns when the piezoelectric sensor is used, a high reading rate can be implemented as compared to the heat-mechanical method which requires a time of about several us to rise a temperature at the time of data reading.

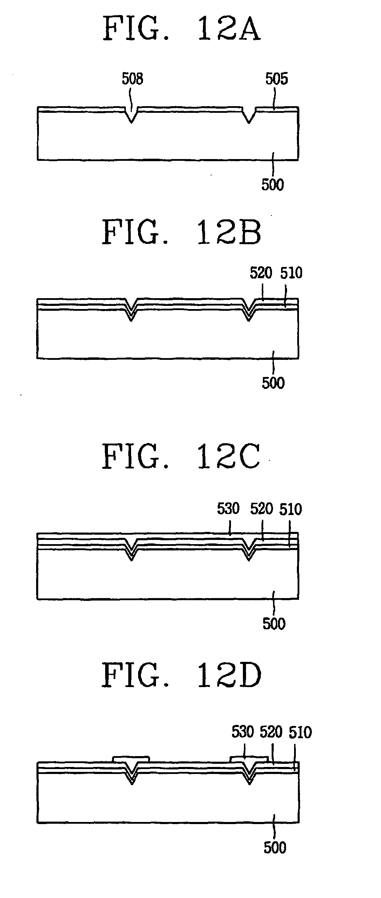

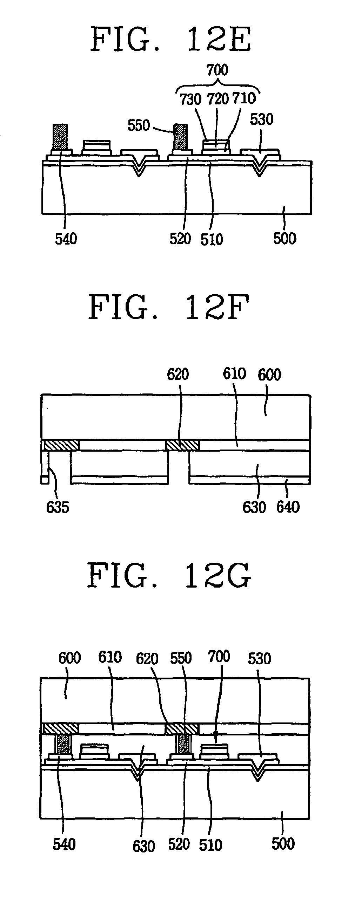

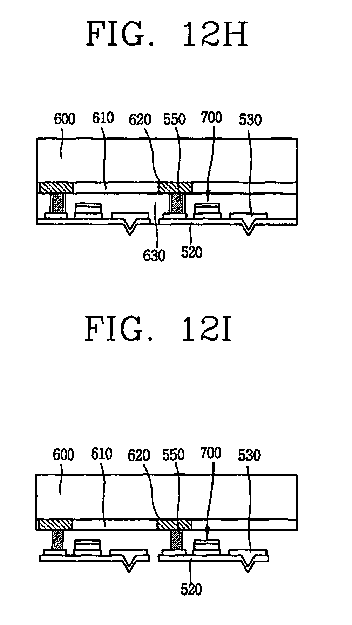

Figures 12A to 12I are sectional views which illustrate one example of sequential processes of fabricating the nano data writing and reading apparatus using the cantilever structure in accordance with the second embodiment. Most of the processes are the same as those of the fabrication method in accordance with the first embodiment of the present invention described referring to Figures 8A to 8I. The only difference therebetween is that a process of forming a piezoelectric sensor, which can measure the bending of the cantilever, on a silicon nitride film from which a cantilever 301 is to be formed is added as shown in Figure 12E instead of the process forming a platform as the data sensing unit. Therefore, the description on the detailed fabrication processes will be omitted.

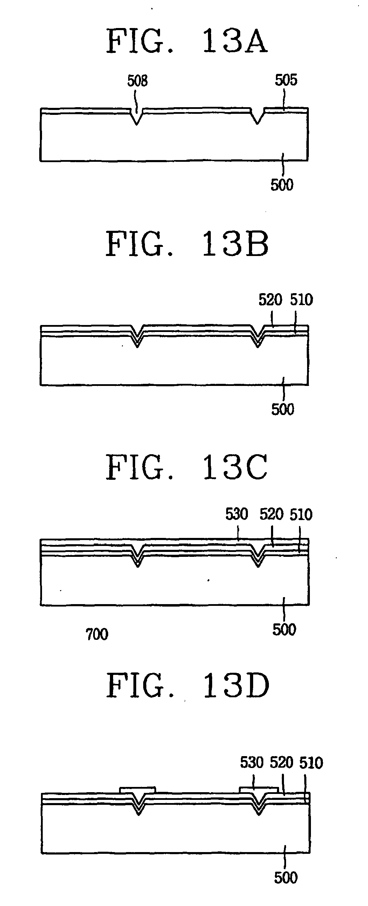

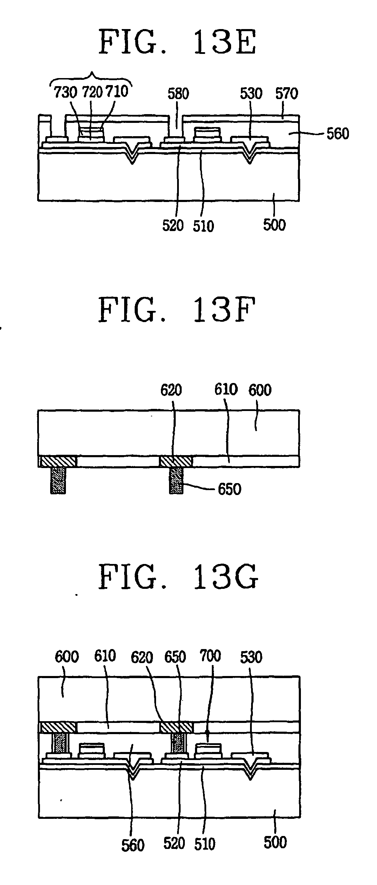

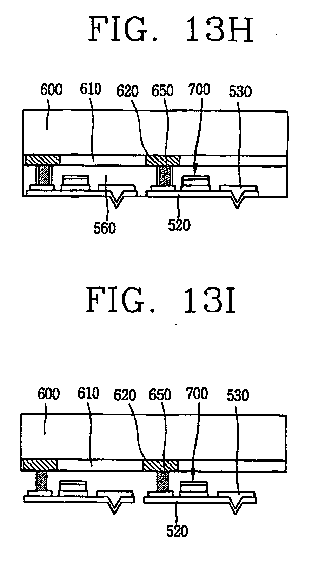

Figures 13A to 13I are sectional views which illustrate another example of sequential processes of fabricating the nano data writing and reading apparatus using the cantilever structure in accordance with the second embodiment of the present invention, and such processes are performed in the similar manner to those illustrated in the sectional views of Figures 12A to 12I. The only difference therebetween is that the polyimide layers 560 and 570 and the through hole 580 are formed on the cantilever array substrate, and the bonding bump 650 meshing therewith is formed on the bonding pad 620 formed on the signal transfer circuit unit substrate.

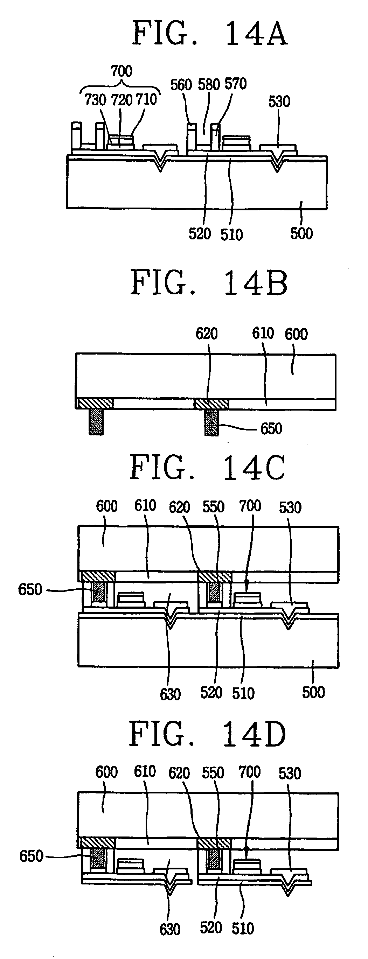

Also, Figures 14A to 14D illustrate another example of a bonding process between the cantilever structure substrate and the signal transfer circuit unit substrate in the process of fabricating the nano data writing and reading apparatus using the cantilever structure in accordance with the second embodiment of the present invention. Such a bonding process may be applied to every embodiment of the fabrication process in accordance with the present invention. If this bonding process is used, a separate process of removing a polyimide layer is not required.

Namely, the polyimide layers 560 and 570 and the through hole 580 for bonding are formed on the cantilever array substrate 500 as shown in Figure 14A, and the bonding bump 650 for signal connection and physical support is formed on the signal transfer circuit unit substrate 600. Here, as in the aforementioned fabrication method, before the bonding process between the two substrates is performed, the polyimide layers 560 and 570 excluding their portions surrounding the through hole 580 undergoes etching and removing. Thus, a separate process for etching and removing the polyimide layer is not required, so that the process is facilitated and the physical support strength of the bonding unit is also improved.

Here, states of bonding layers and a substrate where bonding structures are formed are not limited but may be flexibly controlled corresponding to a process state and a fabrication environment, which allows the process to be freely designed.

As described so far, in the nano data writing and reading apparatus using the cantilever structure and its fabrication method in accordance with the present invention, a groove having a probe shape is formed on a silicon substrate by etching, a silicon nitride film of a uniform thickness is deposited thereon, and a cantilever and a probe are simultaneously formed by using the silicon nitride film. Accordingly, the uniform thickness of the cantilever and the uniform height of the probe can be obtained. Also, as the probe is formed of a silicon nitride material, its durability is greatly improved.

Also, a heater and a platform are formed of polycrystalline silicon, and a cantilever array substrate is formed without a bonding process with a glass substrate, which contributes to reducing a wafer-level bonding process requiring precision in the entire process. Accordingly, the process can be facilitated and thus a fabrication cost is thusly reduced.

Also, because the aforementioned characteristics in the aspect of both the structure and the fabrication method are still applied to the case where a cantilever structure performing writing using heat and performing reading using a piezoelectric sensor is produced, the uniformity of the thickness of the cantilever and the durability of the probe are improved, efficiency of the fabrication process is improved, and the fabrication cost can be reduced.

## Claims

1. A fabrication method of a nano data writing and reading apparatus using a cantilever structure, the method comprising:
forming a probe groove (508) at a surface of a silicon substrate (500);
forming a silicon nitride film (520) at the surface of the silicon substrate (500) having the probe groove (508);
forming a cantilever (301) with a probe (302) by forming the silicon nitride flim (520) at the silicon substrate (500) as the silicon nitride film (520) is filled in the probe groove (508), wherein the cantilever (301) and the probe (302) are formed of the silicon nitride film (520),
forming a heater (304) on a rear surface of the probe (302); patterning the cantitever (301) on the silicon nitride film (520), and forming a signal connection pad (540) electrically connected to the heater (304) on the cantilever (301) and a data sensing unit connected to the signal connection pad (540);
bonding a substrate provided with the signal transfer circuit unit (400) with the silicon substrate (500) provided with the cantilever (301), for supporting the cantilever (301) and electrically connecting the signal transfer circuit (400) unit with the signal connection pad (540), and and removing the silicon substrate (500), for exposing the cantilever (301) and the probe (302),
wherein the heater (304) is placed on the rear surface of the probe (302), by patterning a polycrystalline silicon material formed on the silicon nitride film (520) which is filled in the probe groove (508).

2. The method of claim 1, wherein the first step comprises:
- forming the silicon nitride film (520) at the surface of the silicon substrate (500) and exposing one portion of the surface of the silicon substrate (500) to form the probe groove (508); and
- forming the probe (302) by wet-etching the silicon substrate (500) through the surface of the exposed silicon substrate (500).

3. The method of claim 1, wherein, in the second step, a silicon oxide film (510) is further formed at the surface of the silicon substrate (500) before the silicon nitride (520) is formed, and in the fifth step, the silicon oxide film (510) is removed together with the silicon substrate (500).

4. The method of claim 3, wherein the silicon oxide film (510) is formed by a thermal oxidation method.

5. The method of claim 1, wherein the data sensing unit is a platform formed to be connected to both side surfaces of the heater (304) and the signal connection pad (540) when the heater (304) is formed.

6. The method of claim 5, wherein the platform is made of the same material as the heater (304).

7. The method of claim 1, wherein the data sensing unit is a piezoelectric capacitor formed on the signal connection pad (540).

8. The method of claim 1, wherein the fourth step comprises:
- forming a first bonding structure protruding from one surface of the cantilever (301) to a certain height in order to electrically connect the signal connection pad (540) formed at the cantilever (301) with an exterior portion; and
- forming a second bonding structure coupled to the first bonding structure when the two substrates are bonded together.

9. The method of claim 8, wherein the step of forming the second bonding structure comprises:
- forming a bonding pad (620) connected to a signal line of the signal transfer circuit unit (400) and forming a polyimide layer (630) on its entire upper surface; and
- forming a through hole (635) at the polyimide layer (630) so as to expose the bonding pad (620).

10. The method of claim 9, wherein, after the first step, the polyimide layer (630) is removed so that the cantilever (301) can be supported at the signal transfer circuit unit substrate (600) and be thusly suspended.

11. The method of claim 1, wherein the fourth step comprises:
- forming a polyimide layer (630) on the substrate (500) provided with the cantilever (301) and then
- forming a through hole (635) at the polyimide layer (630) in order to expose part of the signal connection pad (540) for a connection with an exterior portion;
- forming a bonding pad (620) connected to a circuit unit signal line on the signal transfer circuit unit substrate (600);
- forming a bump (550) protrudingly formed on the bonding pad (620) to a certain height to be electrically connected to an exterior portion; and
- bonding the two substrates together and coupling the bump (550) with the exposed signal connection pad (540).

12. The method of claim 11, wherein, after the fifth step, the polyimide layer (630) is removed so that the cantilever (301) can be supported at the signal transfer circuit unit substrate (600) and be thusly suspended.

13. The method of claim 9, the step of forming the through hole (635) by etching the polyimide layer (630) further comprises:
etching and removing the polyimide layer (630), excluding their portions surrounding the through hole (635) when the through hote (635) is formed.

14. A nano data writing and reading apparatus using a cantilever structure comprising:
a cantilever (301);
a probe (302) placed at the cantilever (301);
a heater (304) placed on a rear surface of the probe (302) according to the fabrication method of claim 1, for heating the probe (302); and
a piezoelectric sensor (310) placed on the cantilever (301), for sensing a stress change of the cantilever (301).

## Patentansprüche

1. Herstellungsverfahren für eine eine Auslegerstruktur verwendende Nano-Datenschreib- und -lesevorrichtung, wobei das Verfahren umfasst:
Bilden einer Sondennut (508) auf einer Oberfläche eines Silikonsubstrats (500);
Bilden eines Silikonnitridfilms (520) auf der Oberfläche des Silikonsubstrats (500), die die Sondennut (508) aufweist;
Bilden eines Auslegers (301) mit einer Sonde (302) durch Bilden des Silikonnitridfilms (520) auf dem Silikonsubstrat (500), während der Silikonnitridfilm (520) in die Sondennut (508) gefüllt wird, wobei der Ausleger (301) und die Sonde (302) aus dem Silikonnitridfilm (520) gebildet werden;
Bilden eines Heizers (304) auf einer Rückseite der Sonde (302); Strukturformen des Auslegers (301) auf dem Silikonnitridfilm (520); und Bilden eines Signalanschlusspads (540), das elektrisch mit dem Heizer (304) auf dem Ausleger (301) verbunden ist und einer Datenerfassungseinheit, die mit dem Signalanschlusspad (540) verbunden ist;
Binden eines Substrats, das mit der Signalübermittlungsschaltungseinheit (400) versehen ist, mit dem Silikonsubstrat (500), das mit dem Ausleger (301) versehen ist, zum Tragen des Auslegers (301) und elektrischen Verbinden der Signalübermittlungsschaltungseinheit (400) mit dem Signalanschlusspad (540); und
Entfernen des Silikonsubstrats (500) zum Freilegen des Auslegers (301) und der Sonde (302),
wobei der Heizer (304) auf der Rückseite der Sonde (302) durch Strukturformen eines polykristallinen Silikon materials angeordnet wird, das auf dem Silikonnitridfilm (520) gebildet ist, welcher in die Sondennut (508) gefüllt ist.

2. Verfahren nach Anspruch 1, bei dem der erste Schritt umfasst:
- Bilden des Silikonnitridfilms (520) auf der Oberfläche des Silikonsubstrats (500) und Freilegen eines Abschnitts der Oberfläche des Silikonsubstrats (500), um die Sondennut (508) zu bilden; und
- Bilden der Sonde (302) durch Nasssätzen des Silikonsubstrats (500) durch die Oberfläche des freigelegten Silikonsubstrats (500).

3. Verfahren nach Anspruch 1, bei dem in dem zweiten Schritt ferner ein Silikonoxidfilm (510) auf der Oberfläche des Silikonsubstrats (500) gebildet wird, bevor das Silikonnitrid (520) gebildet wird, und in dem fünften Schritt der Silikonoxidfilm (510) zusammen mit dem Silikonsubstrat (500) entfernt wird.

4. Verfahren nach Anspruch 3, bei dem der Silikonoxidfilm (510) durch ein thermisches Oxidationsverfahren gebildet wird.

5. Verfahren nach Anspruch 1, bei dem die Datenerfassungseinheit eine Plattform ist, die dazu geformt ist, mit beiden Seitenflächen des Heizers (304) und dem Signalanschlusspad (540) verbunden zu werden, wenn der Heizer (304) gebildet wird.

6. Verfahren nach Anspruch 5, bei dem die Plattform aus dem gleichen Material wie der Heizer (304) hergestellt wird.

7. Verfahren nach Anspruch 1, bei dem die Datenerfassungseinheit ein piezoelektrischer Kondensator ist, der auf dem Signalanschlusspad (540) gebildet ist.

8. Verfahren nach Anspruch 1, bei dem der vierte Schritt umfasst:
- Bilden einer ersten Bindungsstruktur, die von einer Oberfläche des Auslegers (301) bis zu einer bestimmten Höhe vorsteht, um das Signalanschlusspad (540), das an dem Ausleger (301) gebildet ist, mit einem Außenabschnitt elektrisch zu verbinden; und
- Bilden einer zweiten Bindungsstruktur, die mit der ersten Bindungsstruktur gekoppelt ist, wenn die zwei Substrate aneinander gebunden sind.

9. Verfahren nach Anspruch 8, bei dem der Schritt des Bildens der zweiten Bindungsstruktur umfasst:
- Bilden eines Bindungspads (620), das mit einer Signalleitung der Signalübermittlungsschaltungseinheit (400) verbunden ist, und Bilden einer Polyimidschicht (630) auf dessen gesamter Oberseite; und
- Bilden eines Durchgangslochs (635) auf der Polyimidschicht (630), um das Bindungspad (620) freizulegen.

10. Verfahren nach Anspruch 9, bei dem nach dem ersten Schritt die Polyimidschicht (630) entfernt wird, so dass der Ausleger (301) auf dem Signalübermittlungsschaltungseinheitssubstrat (600) abgestützt und auf diese Weise getragen werden kann.

11. Verfahren nach Anspruch 1, bei dem der vierte Schritt umfasst:
- Bilden einer Polyimidschicht (630) auf dem Substrat (500), das mit dem Ausleger (301) versehen ist, und dann
- Bilden eines Durchgangslochs (635) auf der Polyimidschicht (630), um einen Teil des Signalverbindungspads (540) für eine Verbindung mit einem Außenabschnitt freizulegen;
- Bilden eines Bindungspads (620), das mit einer Schaltungseinheit-Signalleitung auf dem Signalübermittlungsschaltungseinheitssubstrat (600) verbunden ist;
- Bilden eines Höckers (550), der vorstehend auf dem Bindungspad (620) bis zu einer bestimmten Höhe gebildet ist, um mit einem Außenabschnitt elektrisch verbunden zu werden; und
- Verbinden der zwei Substrate miteinander und Koppeln des Höckers (550) mit dem freigelegten Signalverbindungspad (540).

12. Verfahren nach Anspruch 11, bei dem nach dem fünften Schritt die Polyimidschicht (630) entfernt wird, so dass der Ausleger (301) auf dem Signalübermittlungsschaltungseinheitssubstrat (600) abgestützt und auf diese Weise getragen werden kann.

13. Verfahren nach Anspruch 9, bei dem der Schritt des Bildens des Durchgangslochs (635) durch Ätzen der Polyimidschicht (630) ferner umfasst:
Ätzen und Entfernen der Polyimidschicht (630) außer deren Abschnitte, die das Durchgangsloch (635) umgeben, wenn das Durchgangsloch (635) gebildet wird.

14. Eine Auslegerstruktur verwendende Nano-Datenschreib- und -lesevorrichtung, mit:
einem Ausleger (301);
einer Sonde (302), die an dem Ausleger (301) angeordnet ist;
einem Heizer (304), der auf einer Rückseite der Sonde (302) nach dem Herstellungsverfahren nach Anspruch 1 angeordnet ist, zum Erhitzen der Sonde (302); und
einem piezoelektrischen Sensor (310), der an dem Ausleger (301) zum Erfassen einer Spannungsänderung des Auslegers (301) angeordnet ist.

## Revendications

1. Procédé de fabrication d'un appareil d'écriture et de lecture de nanodonnées utilisant une structure de porte-à-faux, le procédé comprenant :
la formation d'une rainure de sonde (508) sur une surface d'un substrat de silicium (500) ;
la formation d'un film de nitrure de silicium (520) à la surface du substrat de silicium (500) ayant la rainure de sonde (508) ;
la formation d'un porte-à-faux (301) avec une sonde (302) en formant le film de nitrure de silicium (520) sur le substrat de silicium (500) alors que le film de nitrure de silicium (520) est déposé dans la rainure de sonde (508), dans lequel le porte-à-faux (301) et la sonde (302) sont formés du film de nitrure de silicium (520) ;
la formation d'un réchauffeur (304) sur une surface arrière de la sonde (302) ; la modélisation du porte-à-faux (301) sur le film de nitrure de silicium (520) ; et la formation d'une pastille de connexion de signaux (540) électriquement connectée au réchauffeur (304) sur le porte-à-faux (301) et d'une unité de détection de données connectée à la pastille de connexion de signaux (540) ;
la liaison d'un substrat prévu avec l'unité de circuit de transfert de signaux (400) avec le substrat de silicium (500) prévu avec le porte-à-faux (301), pour supporter le porte-à-faux (301) et connecter électriquement l'unité de circuit de transfert de signaux (400) avec la pastille de connexion de signaux (540) ; et
la suppression du substrat de silicium (500) pour exposer le porte-à-faux (301) et la sonde (302),
dans lequel le réchauffeur (304) est placé sur la surface arrière de la sonde (302) par modélisation d'un matériau de silicium polycristallin formé sur le film de nitrure de silicium (520) qui est déposé dans la rainure de sonde (508).

2. Procédé selon la revendication 1, dans lequel la première étape comprend :
- la formation du film de nitrure de silicium (520) à la surface du substrat de silicium (500) et l'exposition d'une partie de la surface du substrat de silicium (500) pour former la rainure de sonde (508) ; et
- la formation de la sonde (302) par gravure humide du substrat de silicium (500) à travers la surface du substrat de silicium (500) exposée.

3. Procédé selon la revendication 1, dans lequel, à la deuxième étape, un film d'oxyde de silicium (510) est en outre formé à la surface du substrat de silicium (500) avant que le film de nitrure de silicium (520) ne soit formé, et à la cinquième étape, le film d'oxyde de silicium (510) est supprimé en même temps que le substrat de silicium (500).

4. Procédé selon la revendication 3, dans lequel le film d'oxyde de silicium (510) est formé par un procédé d'oxydation thermique.

5. Procédé selon la revendication 1, dans lequel l'unité de détection de données est une plate-forme formée pour être connectée aux deux surfaces latérales du réchauffeur (304) et à la pastille de connexion de signaux (540) lorsque le réchauffeur (304) est formé.

6. Procédé selon la revendication 5, dans lequel la plate-forme est constituée du même matériau que le réchauffeur (304).

7. Procédé selon la revendication 1, dans lequel l'unité de détection de données est un condensateur piézoélectrique formé sur la pastille de connexion de signaux (540).

8. Procédé selon la revendication 1, dans lequel la quatrième étape comprend :
- la formation d'une première structure de liaison faisant saillie à partir d'une surface du porte-à-faux (301) jusqu'à une certaine hauteur afin de connecter électriquement la pastille de connexion de signaux (540) formée au niveau du porte-à-faux (301) avec une partie extérieure ; et
- la formation d'une deuxième structure de liaison couplée à la première structure de liaison lorsque les deux substrats sont liés ensemble.

9. Procédé selon la revendication 8, dans lequel l'étape de formation de la deuxième structure de liaison comprend :
- la formation d'une pastille de liaison (620) connectée à une ligne de signaux de l'unité de circuit de transfert de signaux (400) et la formation d'une couche de polyimide (630) sur la totalité de sa surface supérieure ; et
- la formation d'un trou traversant (635) au niveau de la couche de polyimide (630) de façon à exposer la pastille de liaison (620).

10. Procédé selon la revendication 9, dans lequel, après la première étape, la couche de polyimide (630) est supprimée de façon à ce que le porte-à-faux (301) puisse être supporté au niveau du substrat d'unité de circuit de transfert de signaux (600) et être ainsi mis en suspension.

11. Procédé selon la revendication 1, dans lequel la quatrième étape comprend :
- la formation d'une couche de polyimide (630) sur le substrat (500) prévu avec le porte-à-faux (301) et ensuite
- la formation d'un trou traversant (635) au niveau de la couche de polyimide (630) de façon à exposer une partie de la pastille de connexion de signaux (540) pour une connexion avec une partie extérieure ;
- la formation d'une pastille de liaison (620) connectée à une ligne de signaux d'unité de circuit sur le substrat d'unité de circuit de transfert de signaux (600) ;
- la formation d'un bossage (550) formé en saillie sur la pastille de liaison (620) jusqu'à une certaine hauteur pour être électriquement connecté à une partie extérieure ; et
- la liaison des deux substrats ensemble et le couplage du bossage (550) avec la pastille de connexion de signaux (540) exposée.

12. Procédé selon la revendication 11, dans lequel, après la cinquième étape, la couche de polyimide (630) est supprimée de façon à ce que le porte-à-faux (301) puisse être supporté au niveau du substrat d'unité de circuit de transfert de signaux (600) et être ainsi mis en suspension.

13. Procédé selon la revendication 9, l'étape de formation du trou traversant (635) par gravure de la couche de polyimide (630) comprend en outre :
la gravure et la suppression de la couche de polyimide (630) à l'exclusion de leurs parties entourant le trou traversant (635) lorsque le trou traversant (635) est formé.

14. Appareil d'écriture et de lecture de nanodonnées utilisant une structure de porte-à-faux comprenant :
un porte-à-faux (301) ;
une sonde (302) placée au niveau du porte-à-faux (301) ;
un réchauffeur (304) placé sur une surface arrière de la sonde (302) conformément au procédé de fabrication selon la revendication 1 pour réchauffer la sonde (302) ; et
un détecteur piézoélectrique (310) placé sur le porte-à-faux (301) pour détecter un changement de contrainte du porte-à-faux (301).
